# EUROPEAN PATENT SPECIFICATION

(11) **EP 1 610 636 B1**
(45) Date of publication and mention of the grant of the patent: **11.11.2009**
(21) Application number: 03701165.7
(22) Date of filing: 09.01.2003
(51) Int. Cl.: A42B 3/00

(54) **METHOD FOR MANUFACTURING SAFETY HELMET AND SAFETY HELMET MANUFACTURED WITH THE SAME**
VERFAHREN ZUR HERSTELLUNG EINES SCHUTZHELMES UND AUF DIESE WEISE HERGESTELLTER SCHUTZHELM
PROCEDE DE FABRICATION D'UN CASQUE DE SECURITE ET CASQUE DE SECURITE AINSI FABRIQUE

(43) Date of publication of application: 04.01.2006
(73) Proprietor: LEE, Dong, Seon, Incheon 405-240 (KR)
(72) Inventor: LEE, Dong, Seon, Incheon 405-240 (KR)
(74) Representative: Rondano, Davide
(86) International application number: PCT/KR2003/000036
(87) International publication number: WO 2004/062409

(56) References cited:
- WO-A-01/72160
- CH-A- 359 290
- FR-A- 2 553 266
- JP-A- 2001 226 815
- KR-A- 2000 031 243
- KR-B1- 91 004 205
- US-A- 2 763 005
- US-A- 4 466 138

## Description

### Technical Field

The present invention relates to a method of manufacturing a safety helmet, such as a motorcycle helmet or a sports helmet, and a safety helmet manufactured using the method, and more particularly, to a method of easily manufacturing a safety helmet with a shell, which is made of a fiber-reinforced composite material including high-strength fiber, high elastic fiber, and a thermosetting resin, to be light and shock resistant at a low cost, and an improved safety helmet with excellent inner ventilation.

### Background Art

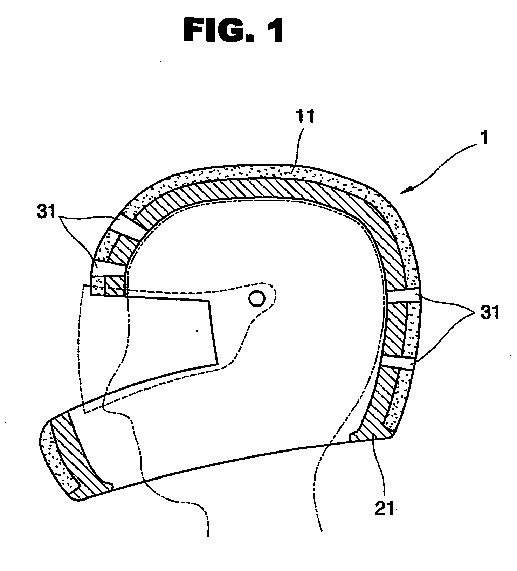

Safety helmets are used to protect human heads from being injured due to sudden accidents that occur when people drive motorcycles or racing cars or work in construction sites or special work sites. FIG. 1 is a cross-section of an example of a conventional safety helmet for motorcycles.

Referring to FIG. 1, the conventional safety helmet 1 includes a shell 11 made of a fiber-reinforced composite material including high-strength fiber, such as glass fiber, carbon fiber, aramid fiber, or spectra fiber, and a thermosetting resin; and a cushion pad 21 attached to the inside of the shell 11. In addition, the safety helmet 1 includes ventilation holes 31 for allowing the air to circulate in an inner space of the safety helmet 1.

In a conventional method of manufacturing the shell 11, an external mold having a molding side for forming the external shape of the shell 11 and an internal mold having a molding side for forming the internal shape of the shell 11 are disposed such that the molding sides face each other, and a fiber-reinforced composite material is injected between the molding sides and then hardened. However, this method requires a lot of expenses to manufacture the molds. Moreover, when heat is applied to the molds in order to harden the fiber-reinforced composite material, the heat is not uniformly transmitted through the molds, so there is a large difference in strength throughout the shell 11.

In another conventional method of manufacturing the shell 11, a molding side of an external mold for forming the external shape of the shell 11 is coated with a fiber-reinforced composite material, and then the fiber-reinforced composite material is rapidly hardened by blowing compressed air and a thermosetting resin on the external mold. However, this method is disadvantageous in that the thickness of the shell 11 is not uniform.

WO 01/72160 A1 discloses a method for manufacturing a safety helmet, comprising: molding a liner in a head-like shape with a thermosetting resin; forming a stack of hybrid composite material on the liner with a fiber-reinforced composite material and a high-elastic fiber-reinforced composite material; and placing the liner with the stack of hybrid composite material in a mold assembled from a plurality of mold fragments, and applying pressure to the liner with a metal pad in a high-temperature chamber, to harden the hybrid composite material.

As indicated by a dashed and two dotted line in FIG. 1, since the inside of the cushion pad 21 is mostly in close contact with a user's head, the ventilation holes 31 are actually blocked so that external air cannot flow into the inside of the safety helmet 1. Accordingly, the safety helmet 1 causes the user to feel unpleasant and is harmful in terms of sanitation. Moreover, when the user drives a motorcycle at high speeds, although the air can flow into the inside of the safety helmet 1 through the ventilation holes 31, the ventilation holes 31 cause the user to be exposed to a very loud wind sound, which disturbs the user's concentration on driving. As a result, an accident may occur.

### Disclosure of the Invention

The present invention provides a method of manufacturing an improved light, shock-resistant and tension-proof safety helmet at a low cost.

The present invention also provide a safety helmet which reduces unpleasantness by preventing a user's head from becoming clammy with sweat and eliminates bad sanitary conditions.

According to an aspect of the present invention, there is provided a method of manufacturing a safety helmet. The method includes molding a liner, which has an inner space and an opening at its lower portion in order to allow a user's head to be put into the safety helmet, using a thermoplastic resin; covering the outside of the liner with a reinforced fiber sheet formed using a textile or a non-woven fabric made of high-strength fiber and high elastic fiber; preparing a mold having a concave molding side and disposing the liner in the mold upside down such that the reinforced fiber sheet is positioned between the molding side and the liner; injecting a thermosetting resin between the liner and the molding side and hardening the thermosetting resin; and detaching the hardened thermosetting resin from the mold.

According to another aspect of the present invention, there is provided a safety helmet including a shell, which is manufactured by a method including molding a liner, which has an inner space and an opening at its lower portion in order to allow a user's head to be put into the safety helmet, using a thermoplastic resin; covering the outside of the liner with a reinforced fiber sheet formed using a textile or a non-woven fabric made of high-strength fiber and high elastic fiber; preparing a mold having a concave molding side and disposing the liner in the mold upside down such that the reinforced fiber sheet is positioned between the molding side and the liner; injecting a thermosetting resin between the liner and the molding side and hardening the thermosetting resin; and detaching the hardened thermosetting resin from the mold; and a cushion pad, which is attached to the inside of the liner in order to alleviate external shock to the user's head.

Preferably, the cushion pad includes a plurality of head supports which extend toward the inner space and contact the user's head.

Preferably, the safety helmet further includes a guide surface having a slant declining forward from a back rim of the opening, in order to guide air flow near the opening into the cushion pad.

### Brief Description of the Drawings

FIG. 1 is a cross-section of a conventional safety helmet.
FIG. 2 is a cross-section of a stage, in which the outside of a liner is covered with a reinforced fiber sheet, in a method of manufacturing a safety helmet according to an embodiment of the present invention.
FIG. 3 is a cross-section of a stage, in which the liner covered with the reinforced fiber sheet is disposed in a mold upside down, in a method of manufacturing a safety helmet according to the embodiment of the present invention.
FIGS. 4 and 5 are a cross-section and a bottom view of an embodiment of a safety helmet manufactured using the method shown in FIGS. 2 and 3.

### Best mode for carrying out the Invention

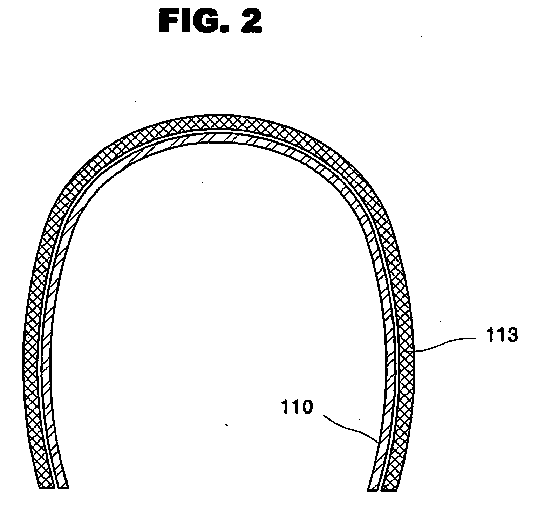

Referring to FIG. 2, in manufacturing a safety helmet according to an embodiment of the present invention, a liner 110 defining an inner space where a user's head goes and having an opening at its lower portion is molded. Next, the outside of the liner 110 is covered with a reinforced fiber sheet 113.

Since it is preferable that the liner 110 has a thickness of 1-2 mm, the liner 110 is made of a thermoplastic resin through molding. Such a molding method is widely known to those skilled in the art, and thus a description thereof will be omitted. The thermoplastic resin for the liner 110 may be a resin such as polyethylene resin, polystyrene resin, polybutyleneterephthalate resin, polyvinylchloride (PVC) resin, polymethylmethacrylate (PMMA) resin, acrylonitrile-butadiene-styrene (ABS) resin, polycarbonate resin, or nylon resin.

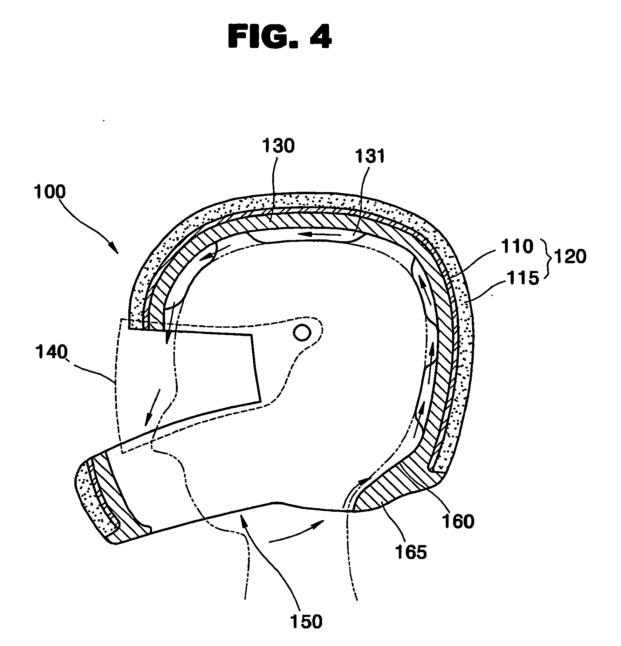

The reinforced fiber sheet 113 is formed using a textile or a non-woven fabric made of high-strength fiber and high elastic fiber. The reinforced fiber sheet 113 may have a single-layer structure but may have a multi-layer structure in order to increase the strength of a shell (120 in FIG. 4). The high-strength fiber may be glass fiber, carbon fiber, aramid fiber, or spectra fiber. The high elastic fiber may be polyurethane fiber, nylon fiber, or polyethyleneterephthalate fiber. Since the reinforced fiber sheet 113 does not contain a resin, it does not closely contact the liner 110.

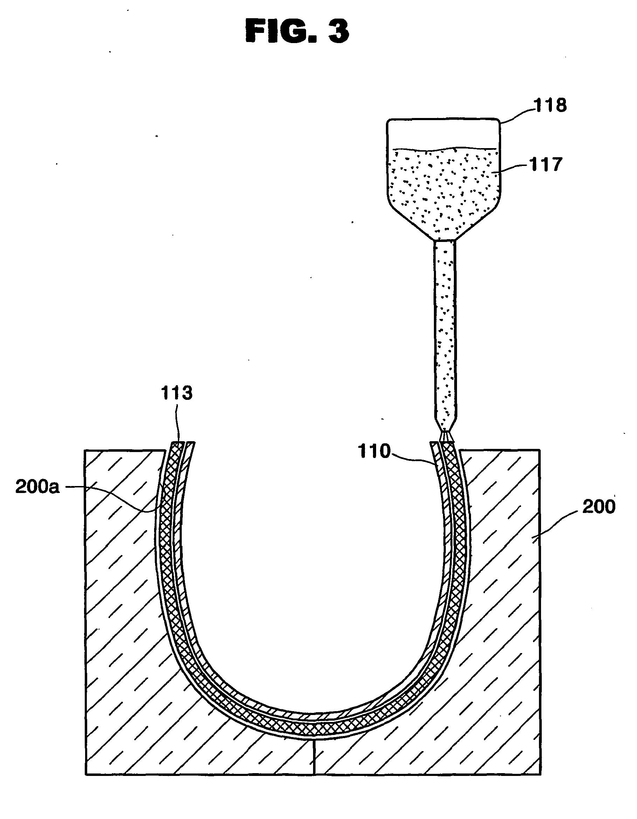

Next, in order to mold the shell of a safety helmet, as shown in FIG. 3, a mold 200 having a concave molding side 200a is prepared, and the liner 110 is disposed in the mold 200 upside down such that the reinforced fiber sheet 113 is positioned between the molding side 200a and the liner 110. A gap between the liner 110 and the molding side 200a can be differently set depending on the thickness of the shell of a safety helmet to be manufactured. Preferably, the mold 200 is composed of at least two mold pieces which are combined with each other to be detachably so that the completed shell can be perfectly detached from the mold 200.

Next, a thermosetting resin 117 is injected between the liner 110 and the molding side 200a of the mold 200 and then hardened. The thermosetting resin 117 may be an unsaturated polyester resin, an epoxy resin, or a phenol resin. As shown in FIG. 3, the unhardened thermosetting resin 117 is injected between the liner 110 and the molding side 200a of the mold 200, using gravitational pull between a tank 118 containing the thermosetting resin 117 and the mold 200 or by applying very slight pressure. Then, the thermosetting resin 117 permeates through a gap between the outside of the liner 110 and the reinforced fiber sheet 113, which are not in close contact with each other, and a gap between the reinforced fiber sheet 113 and the molding side 200a. In addition, the thermosetting resin 117 permeates through the reinforced fiber sheet 113 made of textile or non-woven fabric. Since the thermosetting resin 117 is made to gradually permeate due to gravitational pull without using a special pressing unit or by applying very slight pressure, the gap between the outside of the liner 110 and the molding side 200a can be compactly filled with the thermosetting resin 117. Although a thermosetting resin can be automatically hardened at room temperature, since the thermosetting resin has a larger viscosity than a thermoplastic resin, the thermosetting resin is injected into a mold at high pressure and hardened at a high temperature in a conventional method. However, in the present invention, since the gap between the outside of the liner 110 and the molding side 200a is compactly filled with the thermosetting resin 117 gradually permeating therethrough, the thermosetting resin 117 is hardened at room temperature without any heat applied thereto. Consequently, since the thermosetting resin 117 compactly fills the gap between the outside of the liner 110 and the molding side 200a and is uniformly hardened at room temperature, the shell can have uniform thickness and strength.

Next, the hardened thermosetting resin 117 is detached from the mold 200. By separating the mold 200 into the mold pieces before being combined with each other, the hardened thermosetting resin 117 is detached from the mold 200 without damage to the shape thereof. The hardened thermosetting resin 117, the reinforced fiber sheet 113 disposed within the hardened thermosetting resin 117, and the liner 110 combined with the concavely shaped inner portion of the thermosetting resin 117 constitute the shell of a safety helmet (100 in FIG. 4).

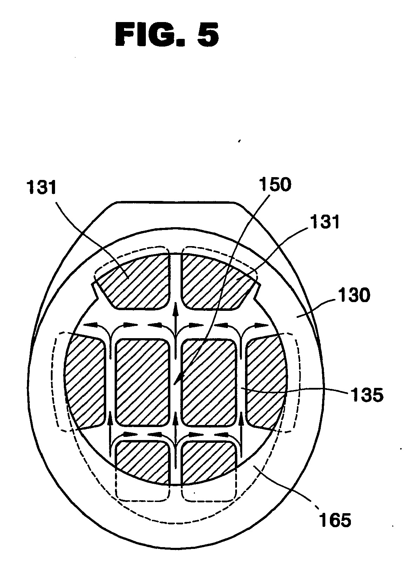

FIGS. 4 and 5 show an embodiment of a safety helmet manufactured using the method shown in FIGS. 2 and 3. The safety helmet 100 includes a shell 120, a cushion pad 130 attached to the inside of a liner 110, and a windshield 140 covering an opening, which is provided at the front portion of the safety helmet 100 to secure the field of vision by shutting out the oncoming wind. As described above, a layer 115 closely contacting the outside of the liner 110 is made of a thermosetting resin (117 shown in FIG. 3) containing a reinforced fiber sheet (113 shown in FIG. 3). Such a thermosetting resin containing a reinforced fiber sheet has better properties, such as higher strength, than a usual thermosetting resin and is thus referred to as a fiber-reinforced composite material. In particular, compared to a usual fiber-reinforced composite material, a fiber-reinforced composite material layer 115 of the safety helmet 100 has improved shock-resistance due to high-strength fibers contained therein and an improved tension-proof effect due to high elastic fibers contained therein. This fiber-reinforced composite material layer 115 is referred to as a hybrid composite material.

The cushion pad 130 attached to the inside of the liner 110 is usually made of a material such as Styrofoam in order to alleviate the external shock to a user's head and to provide comfort, but the present invention is not restricted thereto. The cushion pad 130 includes a plurality of head supports 131, which extend toward the inner space of the safety helmet 100 and thus contact the user's head denoted by a dashed and two dotted line in FIG. 4, and a groove 135, which separates the head supports 131 from one another.

The safety helmet 100 includes a guide surface 160 formed at the back rim of an opening 150, which is provided to receive the user's head, to have a slant declining forward. The guide surface 160 is referred to as a wind flap and guides air flow near the opening 150 to the inside of the cushion pad 130. The guide surface 160 shown in FIG. 4 is provided on the top surface of a protrusion 165 protruding to slant downward from the lower back end of the cushion pad 130. The protrusion 165 has the shape of the crescent moon when viewed from the bottom, as shown in FIG. 5. However, unlike the guide surface 160 shown in FIGS. 4 and 5, a guide surface may extend from the lower back end of the shell 120 or may be attached to the back rim of the opening 150.

When a user wearing the safety helmet 100 drives a motorcycle, the air flows from the front to the back of the safety helmet 100, that is, the air flows from the left to the right in FIG. 4. In this situation, an air flow near the opening 150 of the safety helmet 100 is guided into the cushion pad 130 by the guide surface 160. As shown in FIG. 4, the head supports 131 of the cushion pad 130 contact the user's head, but the groove 135 does not contact the user's head so that the groove 135 serves as a passage for the air guided into the cushion pad 130. Consequently, the air smoothly flows inside the cushion pad 130 of the safety helmet 100 through the guide surface 160 and the groove 135.

A method of manufacturing a safety helmet according to the present invention allows the manufacturing cost of a mold necessary for producing safety helmets to be cut off so that safety helmets having various shapes and standards can be manufactured using a fiber-reinforced composite material at a low cost.

In addition, since a reinforced fiber sheet is contained within a thermosetting resin, harmful dust is prevented from being produced when cutting the reinforced fiber sheet during a finishing process such as polishing, thereby improving the working environment in a safety helmet factory.

A safety helmet of the present invention is lighter and has better shock-resistance and tension-proof than a conventional safety helmet made of a fiber-reinforced composite material.

Moreover, a safety helmet of the present invention allows external air to smoothly flow therein and thus prevents a user's head from becoming clammy with sweat. As a result, the user can feel pleasant and can be under good conditions in terms of sanitation. In particular, in the case of a safety helmet for a motorcycle, since a windshield is prevented from steaming up, a user wearing the safety helmet can safely drive a motorcycle. In addition, the user can drive without being disturbed by loud wind sounds caused by ventilation holes used for the inflow of air in conventional technology.

While this invention has been particularly shown and described with reference to preferred embodiments thereof, it will be understood by those skilled in the art that various changes in form and details may be made therein without departing from the scope of the invention as defined by the appended claims.

### Industrial Applicability

The present invention can be applied to safety helmets for protecting users' head while the users are driving motorcycles or racing cars or doing high-contact sports.

## Claims

1. A method of manufacturing a safety helmet (100), the method comprising:
molding a liner (110), which has an inner space and an opening at its lower portion in order to allow a user's head to be put into the safety helmet (100), using a thermoplastic resin;
covering the outside of the liner with a reinforced fiber sheet (113) formed using a textile or a non-woven fabric made of high-strength fiber and high elastic fiber;
preparing a mold (200) having a concave molding side (200a) and disposing the liner (110) in the mold (200) upside down such that the reinforced fiber sheet (113) is positioned between the molding side (200a) and the liner (110);
injecting a thermosetting resin (117) between the liner (110) and the molding side (200a) and hardening the thermosetting resin (117); and
detaching the hardened thermosetting resin (117) from the mold (200).

2. A safety helmet (100) comprising:
a shell (120), which is manufactured by a method comprising molding a liner (110), which has an inner space and an opening at its lower portion in order to allow a user's head to be put into the safety helmet (100), using a thermoplastic resin; covering the outside of the liner (110) with a reinforced fiber sheet (113) formed using a textile or a non-woven fabric made of high-strength fiber and high elastic fiber; preparing a mold (200) having a concave molding side (200a) and disposing the liner (110) in the mold (200) upside down such that the reinforced fiber sheet (113) is positioned between the molding side (200a) and the liner (110); injecting a thermosetting resin (117) between the liner (110) and the molding side (200a) and hardening the thermosetting resin (117); and detaching the hardened thermosetting resin (117) from the mold (200) ; and
a cushion pad (130), which is attached to the inside of the liner (110) in order to alleviate external shock to the user's head.

3. The safety helmet (100) of claim 2, wherein the cushion pad (130) comprises a plurality of head supports (131) which extend toward the inner space and contact the user's head.

4. The safety helmet (100) of claim 3, further comprising a guide surface (160) having a slant declining forward from a back rim of the opening, in order to guide air flow near the opening (150) into the cushion pad (130).

## Patentansprüche

1. Verfahren zur Herstellung eines Sicherheitshelms (100), das Verfahren umfassend:
Formen eines Einsatzes (110) unter Verwendung eines thermoplastischen Kunstharzes, welcher Einsatz einen Innenraum und eine Öffnung an seinem unteren Abschnitt aufweist, um zu ermöglichen, dass der Kopf eines Benutzers in den Sicherheitshelm (100) gesteckt wird;
Bedecken der Aussenseite des Einsatzes mit einer verstärkten Fasermatte (113), die unter Verwendung eines textilen oder nicht-gewebten Stoffes geformt ist, der aus hochfesten Fasern und hochelastischen Fasern hergestellt ist;
Vorbereiten einer Form (200) mit einer konkaven Formseite (200a) und Anordnen des Einsatzes (110) in der Form (200) mit der Oberseite nach unten, so dass die verstärkte Fasermatte (113) zwischen der Formseite (200a) und dem Einsatz (110) angeordnet ist;
Einspritzen eines wärmehärtenden Kunstharzes (117) zwischen den Einsatz (110) und die Formseite (200a) und Härten des wärmehärtenden Kunstharzes (117); und
Loslösen des gehärteten wärmehärtenden Kunstharzes (117) von der Form (200).

2. Sicherheitshelm (100), umfassend:
eine Schale (120), die hergestellt ist durch ein Verfahren umfassend Formen eines Einsatzes (110) unter Verwendung eines thermoplastischen Kunstharzes, welcher Einsatz einen Innenraum und eine Öffnung an seinem unteren Abschnitt aufweist, um zu ermöglichen, dass der Kopf eines Benutzers in den Sicherheitshelm (100) gesteckt wird; Bedecken der Aussenseite des Einsatzes (110) mit einer verstärkten Fasermatte (113), die unter Verwendung eines textilen oder nicht-gewebten Stoffes geformt ist, der aus hochfesten Fasern und hochelastischen Fasern hergestellt ist;
Vorbereiten einer Form (200) mit einer konkaven Formseite (200a) und Anordnen des Einsatzes (110) in der Form (200) mit der Oberseite nach unten, so dass die verstärkte Fasermatte (113) zwischen der Formseite (200a) und dem Einsatz (110) angeordnet ist; Einspritzen eines wärmehärtenden Kunstharzes (117) zwischen den Einsatz (110) und die Formseite (200a) und Härten des wärmehärtenden Kunstharzes (117);
und Loslösen des gehärteten wärmehärtenden Kunstharzes (117) von der Form (200), und
ein Polsterkissen (130), das an der Innenseite des Einsatzes (110) angebracht ist, um einen Schlag von außen auf den Kopf des Benutzers abzumildern.

3. Sicherheitshelm (100) nach Anspruch 2,
wobei das Polsterkissen (130) eine Mehrzahl von Kopfstützen (131) umfasst, die sich zu dem Innenraum hin erstrecken und den Kopf des Benutzers berühren.

4. Sicherheitshelm (100) nach Anspruch 3,
weiter umfassend eine Führungsfläche (160) mit einer Neigung die sich von einem hinteren Rand der Öffnung nach vorne neigt, um einen Luftstrom nahe der Öffnung (150) in das Polsterkissen (130) zu führen.

## Revendications

1. Un procédé de fabrication d'un casque de sécurité (100), le procédé comprenant :
le moulage d'un chemisage (110) ayant un espace interne et une ouverture à l'emplacement de sa partie inférieure permettant à un utilisateur de placer sa tête dans le casque de sécurité (100), au moyen d'une résine thermoplastique ;
le recouvrement de l'extérieur du chemisage par une feuille de fibre renforcée (113) formée par un textile ou d'un tissu non tissé constitué de fibres haute résistance et de fibres haute élasticité ;
la préparation d'un moule (200) ayant un côté de moulage concave (200a) et l'agencement du chemisage (110) dans le moule (200) en position renversée de telle façon que la feuille de fibre renforcée (113) soit placée entre le côté de moulage (200a) et le chemisage (110) ;
l'injection d'une résine thermodurcissable (117) entre le chemisage (110) et le côté de moulage (200a) et le durcissement de la résine thermodurcissable (117) ; et
le retrait de la résine thermodurcissable (117) durcie du moule (200).

2. Un casque de sécurité (100) comprenant :
une coque (120) fabriquée au moyen du procédé comprenant le moulage d'un chemisage (110) ayant un espace interne et une ouverture à l'emplacement de sa partie inférieure permettant à un utilisateur de placer sa tête dans le casque de sécurité (100), utilisant une résine thermoplastique, le recouvrement de l'extérieur du chemisage (110) par une feuille de fibre renforcée (113) formée au moyen d'un textile ou d'un tissu non tissé constitué de fibres haute résistance et de fibres haute élasticité, la préparation d'un moule (200) ayant un côté de moulage concave (200a) et l'agencement du chemisage (110) dans le moule (200) en position renversée de telle façon que la feuille de fibre renforcée (113) soit placée entre le côté de moulage (200a) et le chemisage (110), l'injection d'une résine thermodurcissable (117) entre le chemisage (110) et le côté de moulage (200a) et le durcissement de la résine thermodurcissable (117), et le retrait de la résine thermodurcissable (117) durcie du moule (200) ; et
un coussin (130) fixé à l'intérieur du chemisage (110) afin d'amortir les chocs externes pour la tête de l'utilisateur.

3. Le casque de sécurité (100) de la revendication 2, le coussin (130) comprenant une pluralité de supports de tête (131) s'étendant en direction de l'espace interne et entrant en contact avec la tête de l'utilisateur.

4. Le casque de sécurité (100) de la revendication 3, comprenant en outre une surface de guidage (160) s'inclinant vers l'avant depuis une bordure arrière de l'ouverture à l'emplacement, de façon à guider l'écoulement d'air à proximité de l'ouverture (150) dans le coussin (130).
